(19) **Europäisches Patentamt**

**European Patent Office**

**Office européen des brevets**

(11) **EP 1 035 509 B1**

(12) **EUROPEAN PATENT SPECIFICATION**

(45) Date of publication and mention
of the grant of the patent:
**07.04.2004 Bulletin 2004/15**

(51) Int Cl.⁷: **G06T 7/00**, G06T 5/00

(21) Application number: **99125092.9**

(22) Date of filing: **16.12.1999**

(54) **Road modeling method for lane drifting warning system**

Bahnmodellierungsverfahren für Spurabdriftwarnungsystem

Modélisation de route pour système d'avertissage de dérive de voie

(84) Designated Contracting States:
**DE FR GB**

(30) Priority: **12.03.1999  KR 9908274**

(43) Date of publication of application:
**13.09.2000  Bulletin 2000/37**

(73) Proprietor: **Hyundai Motor Company
Jongro-ku, Seoul (KR)**

(72) Inventor: **Byoung-Soo, Kim
Ansan-si, Kyungki-do (KR)**

(74) Representative: **Viering, Jentschura & Partner
Postfach 22 14 43
80504 München (DE)**

(56) References cited:
**EP-A- 0 488 828          EP-A- 0 527 665
EP-A- 0 586 857          US-A- 5 301 115**

**Description**

## BACKGROUND OF THE INVENTION

**(a) Field of the Invention**

The present invention relates to a road modeling method for a lane drifting warning system, and more particularly to a method for a lane drifting warning system in which a road can be precisely modeled while a vehicle is being driven, even with the generation of errors caused by noise in road image signal data.

**(b) Description of the Related Art**

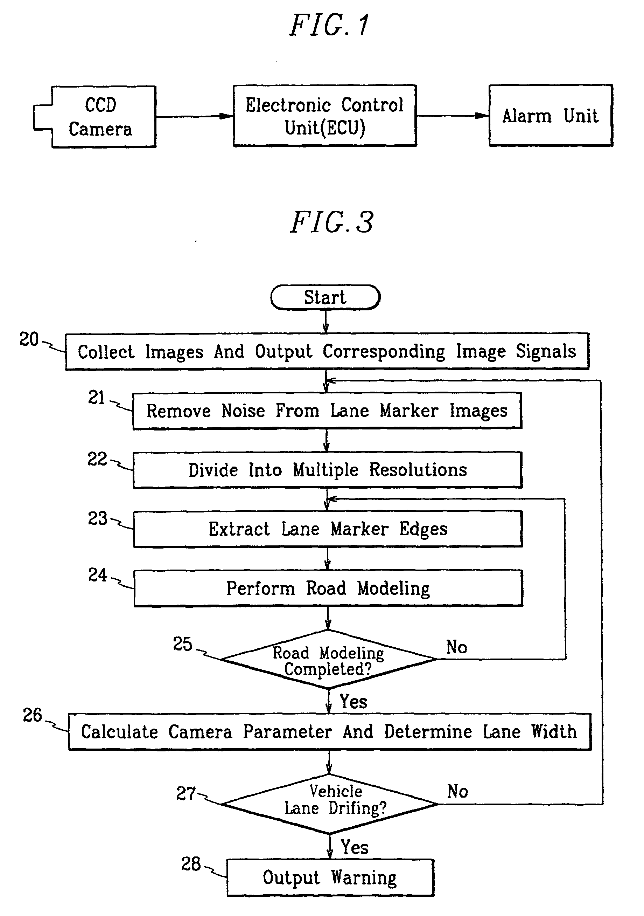

A conventional lane drifting warning system, with reference to FIG. 1, comprises a camera, such as a concatenated disk (CCD) camera for collecting images of lane markers and outputting corresponding image signals; an electronic control unit (ECU) for receiving the image signals output from the camera, processing the image signals using a pre-installed program to determine if the vehicle is veering from the lane it is in, and outputting alarm signals if it is determined that the vehicle is drifting out of the lane; and an alarm unit for outputting an alarm to alert the driver if the alarm signals are output from the ECU.

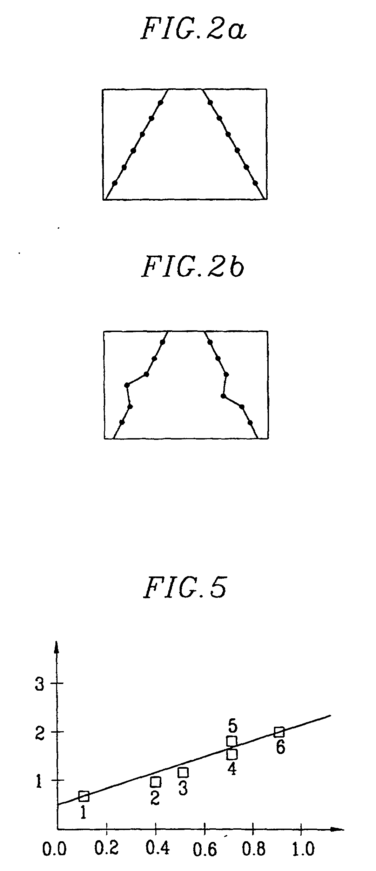

In such a conventional lane drifting warning system, road modeling is performed using the image signals and the program that is pre-installed in the ECU to determine if the vehicle is drifting out of the lane. The road modeling, with reference to FIG. 2a, is performed by extracting and selecting a plurality of points that are determined to be possible indications of road lane markers, then connecting the points by a straight line.

The document US-A-5 301 115 (NOUSO KAZUNORI) 5 April 1994 (1994-04-05) discloses a system using a road lane marker and a counter compared with the limit coordinate value of the road lane.

However, if noise is generated in the image signal data as a result of various external forces (e.g., radio wave interference, physical shocks given to the system, defective parts and operation of the system), road modeling errors can occur such that the lane marker modeling is distorted as shown in FIG. 2b. Accordingly, two serious outcomes may result: not warning the driver when the vehicle is veering from the lane, and erroneously outputting an alarm when the vehicle has not drifted out of the lane.

Further, complicated hardware is required to extract the points that are determined to be possible indications of road lane markers as described above. Finally, the process of extracting such points is inherently slow, making real-time operation difficult. This can lead to alerting the driver in an untimely manner.

## SUMMARY OF THE INVENTION

The present invention has been made in an effort to solve the above problems.

It is an object of the present invention to provide a road modeling method for a lane drifting warning system in which after an edge of lane markers is extracted, road modeling is precisely performed even with the generation of errors as a result of noise in extracted lane marker data.

To achieve the above object, the present invention provides a road modeling method for a lane drifting warning system. The method includes the steps of extracting an edge of lane markers of a lane in which a vehicle is being driven by a camera collecting images of the lane markers and outputting corresponding image signals, removing noise from the lane marker image signals, and dividing the image signals into multiple resolutions; performing road modeling by inputting a minimum number of possible marking points of lane edges, and extracting two straight lines most closely defining the lane by using the least squares method on the points, then determining if the road modeling is completed; calculating a width of the lane if the road modeling is completed by calculating a camera parameter according to a positioning of the camera, and by determining a distance between pixels of image coordinates; and determining if the vehicle is veering from the lane using information of the width of the lane, and outputting a warning if it is determined that the vehicle is veering from the lane.

According to a feature of the present invention, the step of performing road modeling further includes the steps of inputting a minimum number of the possible marking points of the extracted lane edges; obtaining a linear function having a minimum deviation from the possible marking points of the lane edges; and obtaining lines of the lane markings defining the lane using the linear function.

## BRIEF DESCRIPTION OF THE DRAWINGS

The accompanying drawings, which are incorporated in and constitute a part of the specification, illustrate an embodiment of the invention, and, together with the description, serve to explain the principles of the invention:

FIG. 1 is a block diagram of a conventional lane drifting warning system for vehicles;

FIG. 2a is a drawing used to illustrate modeling of lane markers in the conventional lane drifting warning system of FIG. 1;

FIG. 2b is a drawing used to illustrate modeling of lane markers in the conventional lane drifting warning system of FIG. 1, in which noise is generated in image signal data;

FIG. 3 is a flow chart of a road modeling method for a lane drifting warning system according to a preferred embodiment of the present invention;

FIG. 4 is a flow chart used to describe in more detail the road modeling method according to a preferred embodiment of the present invention; and

FIG. 5 is a graph used to illustrate road modeling using the least squares method according to a preferred embodiment of the present invention.

## DETAILED DESCRIPTION OF THE PREFERRED EMBODIMENTS

Preferred embodiments of the present invention will now be described in detail with reference to the accompanying drawings.

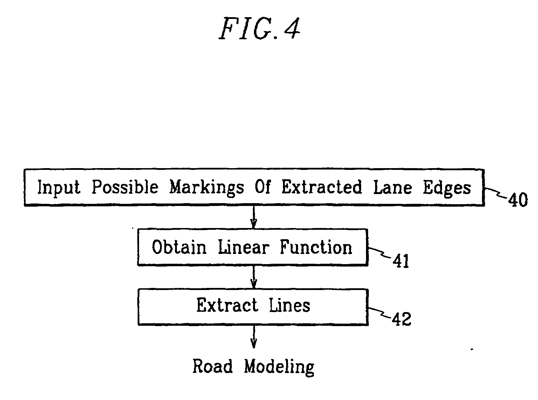

FIG. 3 is a flow chart of a road modeling method for a lane drifting warning system according to a preferred embodiment of the present invention.

First, in step S20, a camera collects images of lane markers of a lane in which the vehicle is being driven, then the images are converted into image signals and output. Next, noise is removed from the lane marker images in step S21, after which the images are divided into multiple resolutions in step S22. Subsequently, while maintaining the multiple resolutions, lane marker edges are quickly extracted in step S23. After the lane marker edges are extracted in step S23, road modeling is performed in step S24. That is, a minimum number of possible markings of lane edges are input, then a straight line most closely following the markings is extracted by using the least squares method (i.e., "the least squares fit").

Next, it is determined if the road modeling process is completed in step S25. If the road modeling is not completed in step S25, the process returns to step S23. However, if the road modeling is completed in step S25, a camera parameter according to a positioning of the camera is calculated, and a width of the lane according to a distance between pixels of image coordinates is determined in step S26. After this step, it is determined if the vehicle is veering from the lane in step S27. If the vehicle is not veering from the lane in step S27, the process returns to step S23. However, if the vehicle is drifting out of the lane in step S27, a warning is output to alert the driver in step S28.

FIG. 4 is a flow chart used to describe in more detail the road modeling method according to a preferred embodiment of the present invention. First, a minimum number of possible markings of the extracted lane edges are input in step S40. Next, a linear function having a minimum deviation is obtained from the possible markings of the lane edges by using the least squares method in step S41. Following this step, lines defining the lane markings are obtained using the linear function in step S42, thereby completing the road modeling process.

FIG. 5 is a graph used to illustrate road modeling using the least squares method according to a preferred embodiment of the present invention. As shown in the drawing, a compromise line fit of the line marking data is obtained using the least squares method, or "least squares fit". That is, after a plurality of possible points for the lane markers are obtained, the least squares method is used to find a compromise line that follows the flow of the points.

The operation of the above method of the present invention will be described hereinafter with reference to elements of a lane drifting warning system.

A CCD camera is mounted at a predetermined location on the vehicle and the camera is connected to an electronic control unit (ECU), the ECU having a predetermined program installed therein. When the vehicle is operated, the camera collects images of lane markers and outputs corresponding image signals to the ECU, thereby performing step S20 in which image signals are input to the ECU.

Next, step S21 is performed in which noise is removed from the image signals using a median filter. After this operation, step S22 is performed in which the image signals are divided into multiple resolutions, thereby enabling the image signals to be quickly processed. That is, the number of pixels in the image signals input into the ECU is reduced in the same, and the pixels are divided to have different multiple resolutions.

Following the above, the ECU performs step S23 and extracts lane marker edges from the lane marker image signals which are divided having different resolutions. Next, the ECU conducts step S24 in which road modeling is performed. In more detail, with reference to FIG. 4, a minimum number of possible markings of the extracted lane edges are input in step S40. Next, performing step S41, a linear function having a minimum deviation is obtained from the possible markings of the lane edges by using the least squares method. Finally, in step S42, lines defining the lane markings are obtained using the linear function in step S42, thereby completing the road modeling process. The following outlines the development of equations to perform this operation.

$$y(x) = a + bxa, \text{ b: unknown quantity} \qquad (1)$$

To obtain a deviation (ri) of each point in equation (1),

$$ri = yi - y(x) = yi - (a + bx), i = 1, 2, 3, ....iL: \text{ total number of measured}$$

$$\text{coordinates} \qquad (2)$$

A total (R) of the squares of deviations

$$R = \Sigma (ri)^2 = \Sigma (yi - a - bxi)^2 \qquad (3)$$

a value to minimize the value of R is obtained
The differentiation of R with respect to a and b is set to 0.

$$\text{differentiation } (R/a) = -2 \Sigma (yi - a - bxi) = 0$$

$$\text{differentiation } (R/b) = -2 (xi - a - bxi) = 0 \qquad (4)$$

If equation (4) is written matrix form:

$$(A(1,1) A(1,2), A(2,1) A(2,2)) (a,b) = (Z1, Z2) \qquad (5)$$

with:

A(1,1) = L
A(1,1) = Σ xi
Z1 = Σ yi
A(1,1) = Σ xi
A(1,1) = Σ (xi)$^2$
Z1 = Σ xi yi
a and b are:

$$a = [A(2,2)Z1 - A(1,2)Z2] / d$$

$$b = [A(1,1)A(2,2) - A(1,2)A(2,1)] / d \qquad (6)$$

$$d = A(1,1) A(1,2) - A(1,2) A(2,1): \text{ determined}$$

An outline of measured lane marker points is as follows:

Table 1

| i | X | v |
|---|---|---|
| 1 | 0.1 | 0.61 |
| 2 | 0.4 | 0.92 |
| 3 | 0.5 | 0.99 |

Table 1 (continued)

| i | X | v |
|---|---|---|
| 4 | 0.7 | 1.52 |
| 5 | 0.7 | 1.47 |
| 6 | 0.9 | 2.03 |

As shown by the measured values in Table 1, also appearing in FIG. 5, even though possible lane markings (i) 2 and 3 are obvious errors resulting from noise, the straight line made following the flow of possible lane markings (i) 1,4,5 and 6 compensates for these errors.

After the ECU has performed the process of road modeling of step S24 as in the above, the ECU performs step S25 and determines if the road modeling is completed. If it is determined that road modeling is not completed, the process returns to step S23. However, if the road modeling is completed, the ECU performs step S26 in which a camera parameter is obtained for fixing the camera at an initial position and calculating the actual width of the lane in order to extract the actual width of the lane from two-dimensional image coordinates with regard to the image signals input from the CCD camera. After the camera parameter is obtained, the actual width of the lane, in the road modeled as in the above, is calculated according to a distance between pixels of image coordinates.

Following the above, the ECU performs step S27 in which it is determined if the vehicle is veering out of the width of the lane calculated in step S26. At this time, if it is determined by the ECU that the vehicle is not veering from the lane, the process returns to step S23. However, if the vehicle is drifting out of the lane in step S27, the ECU performs step S28 and outputs alarm-out signals to an alarm unit, which in turn outputs a warning to alert the driver.

In the road modeling method for a lane drifting warning system of the present invention as described above, precise road modeling of a lane the vehicle is driving in is possible, even with the generation of errors caused by noise in road image signal data.

Although preferred embodiments of the present invention have been described in detail hereinabove, it should be clearly understood that many variations and/or modifications of the basic inventive concepts herein taught which may appear to those skilled in the present art will still fall within the scope of the present invention, as defined in the appended claims.

### Claims

1. A road modeling method for a lane drifting system comprising the steps of:

   extracting an edge of lane markers of a lane in which a vehicle is being driven by a camera collecting images of the lane markers and outputting corresponding image signals, removing noise from the lane marker image signals, and dividing the image signals into multiple resolutions;
   performing road modeling by inputting a minimum number of possible marking points of lane edges, and extracting two straight lines most closely defining the lane by using the least squares method on the points, then determining if the road modeling is completed;
   calculating a width of the lane if the road modeling is completed by calculating a camera parameter according to a positioning of the camera, and by determining a distance between pixels of image coordinates; and
   determining if the vehicle is veering from the lane using information of the width of the lane, and outputting a warning if it is determined that the vehicle is veering from the lane.

2. The road modeling method of claim 1 wherein the step of performing road modeling further comprises the steps of:

   inputting a minimum number of the possible marking points of the extracted lane edges;
   obtaining a linear function having a minimum deviation from the possible marking points of the lane edges; and
   obtaining lines of the lane markings defining the lane using the linear function.

### Patentansprüche

1. Fahrbahnmodellierungs-Verfahren für ein Fahrspur-Abtriftsystem, welches die Schritte aufweist:

Extrahieren eines Randes von Fahrspurmarkierungen einer Fahrspur, in welcher ein Fahrzeug gefahren wird, mittels einer Kamera, welche Bilder von den Fahrspurmarkierungen sammelt und korrespondierende Bildsignale ausgibt, wobei Störungen aus den Fahrspurmarkierungs-Bildsignalen beseitigt werden, und wobei die Bildsignale in mehrere Auflösungen unterteilt werden;

Durchführen einer Fahrbahnmodellierung mittels Eingebens einer minimalen Anzahl von möglichen Markierungspunkten der Fahrspurränder und Extrahierens von zwei geraden Linien, die am nächsten die Fahrspur definieren, durch Anwenden der Methode der kleinsten Quadrate auf die Punkte, dann Ermitteln, ob die Fahrbahnmodellierung beendet ist;

Berechnen einer Breite der Fahrspur, wenn die Fahrbahnmodellierung beendet ist, mittels Berechnens eines Kameraparameters gemäß einer Positionierung der Kamera und mittels Ermittelns eines Abstands zwischen Pixeln der Bildkoordinaten; und

Ermitteln, ob das Fahrzeug von der Fahrspur ausschert, unter Verwendung von Informationen aus der Breite der Fahrspur, und Ausgeben einer Warnung, wenn ermittelt wird, dass das Fahrzeug von der Fahrspur ausschert.

**2.** Fahrbahnmodellierungs-Verfahren gemäß Anspruch 1, wobei der Schritt des Durchführens der Fahrbahnmodellierung ferner die Schritte aufweist:

Eingeben einer minimalen Anzahl von möglichen Markierungspunkten der extrahierten Fahrspurränder;

Erzielen einer linearen Funktion, die eine minimale Abweichung von den möglichen Markierungspunkten der Fahrspurränder hat; und

Erzielen von Linien der Fahrspurmarkierungen, welche die Fahrspur definieren, unter Verwendung der linearen Funktion.

## Revendications

**1.** Procédé de modélisation de route pour un système de dérive de voie comprenant les étapes consistant à :

extraire un bord de marqueurs de voie d'une voie dans laquelle un véhicule roule en utilisant une caméra pour recueillir des images des marqueurs de voie et pour délivrer des signaux d'image correspondants, retirer le bruit des signaux d'image de marqueurs de voie, et diviser les signaux d'image en de multiples résolutions ;

effectuer une modélisation de route en entrant un nombre minimum de points de marquage possibles de bords de voie, et extraire deux lignes droites définissant le plus précisément la voie en utilisant le procédé des moindres carrés sur les points, déterminer ensuite si la modélisation de route est achevée ;

calculer une largeur de la voie si la modélisation de route est achevée en calculant un paramètre de caméra conformément à un positionnement de la caméra et en déterminant une distance entre des coordonnées de pixels d'image ; et

déterminer si le véhicule quitte la voie en utilisant les informations de la largeur de la voie, et délivrer un avertissement s'il est déterminé que le véhicule quitte la voie.

**2.** Procédé de modélisation de route selon la revendication 1, dans lequel l'étape d'exécution d'une modélisation de route comprend les étapes consistant à :

entrer un nombre minimum des points de marquage possibles des bords de voie extraits ;

obtenir une fonction linéaire présentant un écart minimum par rapport aux points de marquage possibles des bords de la voie ; et

obtenir des lignes des marquages de voie définissant la voie en utilisant la fonction linéaire.

## FIG.1

```
┌──────────┐      ┌──────────────────┐      ┌────────────┐
│   CCD    │─────▶│ Electronic Control│─────▶│ Alarm Unit │
│  Camera  │      │     Unit(ECU)     │      │            │
└──────────┘      └──────────────────┘      └────────────┘
```

## FIG.3

```
                    (  Start  )
                        │
                        ▼
20 ─── ┌─────────────────────────────────────────────────┐
       │ Collect Images And Output Corresponding Image Signals │
       └─────────────────────────────────────────────────┘
                        │
                        ▼◀──────────────────────┐
21 ─── ┌──────────────────────────────────┐     │
       │  Remove Noise From Lane Marker Images │  │
       └──────────────────────────────────┘     │
                        │                        │
                        ▼                        │
22 ─── ┌──────────────────────────────────┐     │
       │    Divide Into Multiple Resolutions   │  │
       └──────────────────────────────────┘     │
                        │                        │
                        ▼◀──────────────────┐    │
23 ─── ┌──────────────────────────────────┐│    │
       │      Extract Lane Marker Edges      ││   │
       └──────────────────────────────────┘│    │
                        │                   │    │
                        ▼                   │    │
24 ─── ┌──────────────────────────────────┐│    │
       │        Perform Road Modeling        ││   │
       └──────────────────────────────────┘│    │
                        │                   │    │
                        ▼                   │    │
25 ───        ◇ Road Modeling ◇──── No ─────┘    │
               Completed?                         │
                        │ Yes                     │
                        ▼                         │
26 ─── ┌─────────────────────────────────────────────────┐
       │ Calculate Camera Parameter And Determine Lane Width │
       └─────────────────────────────────────────────────┘
                        │
                        ▼
27 ───        ◇  Vehicle  ◇──── No ──────────────┘
               Lane Drifing?
                        │ Yes
                        ▼
28 ─── ┌──────────────────┐
       │  Output Warning   │
       └──────────────────┘
```

## FIG.2a

## FIG.2b

## FIG.5

*FIG.4*

| Input Possible Markings Of Extracted Lane Edges |
| :---: |

~40

| Obtain Linear Function |
| :---: |

~41

| Extract Lines |
| :---: |

~42

Road Modeling